# NEUE EUROPÄISCHE PATENTSCHRIFT

(11) **EP 2 597 059 B2**
(45) Veröffentlichungstag und Bekanntmachung des Hinweises auf die Entscheidung über den Einspruch: **16.01.2019**
(45) Hinweis auf die Patenterteilung: 29.06.2016
(21) Anmeldenummer: 12193829.4
(22) Anmeldetag: 22.11.2012
(51) Int. Cl.: B65G 17/20, B65G 19/02

(54) **Hängefördereinrichtung**
Suspended transport device
Dispositif de transport suspendu

(30) Priorität: 25.11.2011 DE 102011087123
(43) Veröffentlichungstag der Anmeldung: 29.05.2013
(73) Patentinhaber: RSL Logistik GmbH & Co. KG, 86899 Landsberg (DE)
(72) Erfinder:
(74) Vertreter: Weickmann & Weickmann PartmbB

(56) Entgegenhaltungen:
- EP-A1- 2 128 050
- WO-A1-2013/068327
- DE-A1- 19 536 313
- DE-U1- 29 908 461
- US-A- 5 829 575

## Beschreibung

Die Erfindung betrifft eine Hängefördereinrichtung, umfassend
- ein längs einer Förderstrecke geführtes, längliches, insbesondere als Endlosschleife ausgebildetes Zugmittel,
- eine Vielzahl an dem Zugmittel hängend angeordneter Fördergutträger mit einem jeweiligen in Förderrichtung ausgerichteten, rohrartigen Hohlstangenabschnitt, der einen an seinen Längsenden offenen Hohlraum aufweist, und
- eine strangartige Verbindungsanordnung, die die Fördergutträger verbindet und bereichsweise in den Hohlräumen der Hohlstangenabschnitte aufgenommen ist.

Derartige Hängefördereinrichtungen sind bekannt und dienen zum Transport von Fördergut, welches mittels Haken an die Hohlstangenabschnitte anzuhängen ist. Solche Hängefördereinrichtungen findet man z. B. in Warenlagern, insbesondere in Bekleidungswarenlagern, in denen an Kleiderbügeln hängende Bekleidungsstücke zu transportieren sind, etwa um Sortiervorgänge oder/und Kommissionsvorgänge ablaufen zu lassen. Die Förderstrecken können sich bei Bedarf über mehrere Stockwerke erstrecken und bilden üblicherweise geschlossene Förderkreise oder Förderschleifen, in denen die Fördergutträger umlaufend bewegt werden. Beladestationen und Entladestationen dienen dazu, das Fördergut der Hängefördereinrichtung zuzuführen bzw. davon abzuleiten. Als Zugmittel sind z. B. Förderketten aus Kettengliedern bekannt.

Die in Förderrichtung hintereinander aufgereihten Hohlstangenabschnitte der Fördergutträger und die dazwischen liegenden Bereiche der üblicherweise biegsamen Verbindungsanordnung bilden zusammen einen in Förderrichtung verlaufenden Anhängstrang, an den z. B. mit Kleidungsstücken versehene Kleiderbügel mit ihren Haken angehängt werden können.

Die Biegsamkeit der Verbindungsanordnung ermöglicht mit einfachen Mitteln die Führung des Anhängstranges in Kurven der Förderstrecke.

Aus der US 5 829 575 A ist ein Fördergutträger bekannt, der über zwei Rollenabschnitte auf einer Schiene gelagert ist, wobei der mit den zwei Rollenabschnitten verbundenen nicht-biegsame Fördergutbereich teleskopartig ausgebildet ist, sodass bei Kurvenfahrten der Abstand der beiden Rollenabschnitte variieren kann.

Aus der WO 2013/068327 A1, die Stand der Technik gemäß Artikel 54 (3) EPÜ ist, ist eine Hängefördereinrichtung gemäß dem Oberbegriff des Anspruchs 1 bekannt, wobei deren stangensrtige Verbindungsanordnung ferner in einzelne, voneinander getrennte Überbrückungsstrangabschnitte unterteilt, die jeweils mit ihren entgegengesetzten Längsenden in Hohlräume der Hohlstangenabschnitte aufeinander folgender Fördergutträger eingreifen und diese miteinander verbinden, wobei die Übe brückungsstrangabschnitte relativ zu den betreffenden Fördergutträgern unter Aufrechterhaltung der Verbindung dazwischen mit Längsspiel verschiebbar in den Hohlräumen der Hohlstangenabschnitte der Fördergutträger aufgenommen sind, wobei die Fördergutträger einen jeweiligen Befestigungsabschnitt zur Befestigung an dem Zugmittel und einen den Befestigungsabschnitt mit dem Hohlstangenabschnitt verbindenden Hohlstangenträgerabschnitt aufweisen, wobei der Hohlstangenträgerabschnitt - in Förderrichtung gesehen - wenigstens ein den Hohlstangenabschnitt an einer Seite mit seitlichem Abstand umgebendes Hakenprofil mit einem den Hohlstangenabschnitt an einer Abstützstelle an dessen Unterseite stützenden Hakenende aufweist, so dass der Hohlstangenabschnitt abgesehen von der jeweiligen unteren Abstützstelle von einem Freiraum umgeben ist, wobei die Hohlstangenabschnitte in ihren Hohlräumen Anschlagelemente zur Begrenzung des Längsspiels der Überbrückungsstrangabschnitte aufweisen.

Im Unterschied zu den bekannten gattungsgemäßen Hängefördereinrichtungen ist die strangartige Verbindungsanordnung kein durch eine Vielzahl von Fördergutträgern durchlaufend zusammenhängender Strang, sondern ein in separate Überbrückungsstrangabschnitte unterteilter Strang. Die Strangabschnitte können in Kurven und Übergängen zu Steigungs- bzw. Gefällestreckenabschnitten Ausgleichsbewegungen innerhalb ihres Längsspiels durchführen, was eine sehr spannungsarme Anpassung des aus den Überbrückungsstrangabschnitten und Hohlstangenabschnitten gebildeten Anhängstranges an den Förderstreckenverlauf ermöglicht. Diese spannungsarme Anpassung wird noch erleichtert, wenn die Überbrückungsstrangabschnitte aus einem biegsamen Material gebildet sind oder eine entsprechend formanpassungsfähige Struktur haben.

Die Verwendung einzelner Überbrückungsstrangabschnitte zwischen aufeinander folgenden Fördergutträgern bringt überdies eine Montageerleichterung mit sich, insbesondere bei einem etwaigen Austausch einzelner Fördergutträger, da hierzu bei der Demontage eines Fördergutträgers kein Durchschneiden der Verbindungsanordnung erforderlich ist, sondern lediglich die Enden der zugeordneten Überbrückungsstrangabschnitte aus dem Hohlstangenabschnitt des auszutauschenden Fördergutträgers zu entfernen sind.

In entsprechend einfacher Weise können bei der Montage der Hängefördereinrichtung die Fördergutträger und die Überbrückungsstrangabschnitte Schritt für Schritt nacheinander an das Zugmittel anmontiert werden.

Gemäß einer Ausführungsform der Erfindung handelt es sich bei den Anschlagelementen um zentrale Trennwände, die den jeweiligen Hohlraum eines Hohlstangenabschnittes in dessen Längsmitte unterteilen und als Anschlag für die Längsenden der betreffenden Überbrückungsstrangabschnitte dienen.

Die Abstände der an dem Zugmittel aufeinander folgend angeordneten Fördergutträger sind vorzugsweise gleich und so in Bezug auf die Länge der Überbrückungsstrangabschnitte abgestimmt, dass letztere innerhalb ihres Längsspiels längsbeweglich gelagert sind und sich dennoch im normalen Förderbetrieb nicht von den Fördergutträgern lösen können.

Bei dem Zugmittel handelt es sich vorzugsweise um eine Förderkette mit Kettengliedern aus Gelenkkörpern und Verbindungsstangen zwischen den Gelenkkörpern. Alternativ könnte z. B. ein Zugseil als Zugmittel vorgesehen sein.

Eine derartige Lösung der Abstützung der Hohlstangenabschnitte ermöglicht eine vereinfachte Bedienung der Hängefördereinrichtung beim Beschicken mit Fördergut und bei der Entnahme von Fördergut, da in Richtung der Förderstrecke die Hohlstangenabschnitte keine seitliche oder obere Störkontur aufweisen, welche beim Anhängen von Kleiderbügelhaken oder dgl. an den Anhängstrang während des laufenden Förderbetriebs stören könnten. Der - abgesehen von der jeweiligen unteren Abstützstelle des Hohlstangenab- schnittes - um die Hohlstangenabschnitte umlaufende Freiraum erleichtert in diesem Sinne den Zugriff auf den Anhängstrang.

Vorzugsweise sind die Fördergutträger als einstückig integrale Spritzgussteile aus Kunststoff gefertigt. Sie lassen sich daher in großer Stückzahl vergleichsweise preiswert herstellen und haben ein vorteilhaft geringes Eigengewicht.

Eine besonders montagefreundliche Ausführungsform der Hängefördereinrichtung nach der Erfindung ist dadurch gekennzeichnet, dass die Fördergutträger Befestigungsabschnitte zur Befestigung an dem Zugmittel aufweisen, wobei der Befestigungsabschnitt wenigstens ein Schnappverbindungselement umfasst, welches mit dem Zugmittel in Schnappverbindung steht. Das Schnappverbindungselement umfasst gemäß einer bevorzugten Variante zwei rückfedernd auseinander spreizbare Schenkel, die das Zugmittel zwischen sich aufnehmen. Zur Sicherung des Befestigungsabschnitts an dem Zugmittel weisen die Schenkel des Schnappverbindungselements an ihren freien Schenkelenden gemäß einer Ausführungsvariante der Erfindung einander gegenüberliegende hakenförmige Hinterschneidungen auf, mit denen sie das Zugmittel an dessen Oberseite übergreifen. Die hakenförmigen Bereiche mit Hinterschneidungen bilden somit eine Art formschlüssige Absturzsicherung des betreffenden Fördergutträgers an dem Zugmittel.

Gemäß einer bevorzugten Weiterbildung der Erfindung in der Ausführungsform mit einer Förderkette aus Gelenkkörpem und Verbindungsstangen weisen die Verbindungsstange jedes Förderkettengliedes und die Schenkel der Schnappverbindungselemente einander komplementäre und jeweils in gegenseitigem Eingriff stehende Eingriffsmittel zur Festlegung der Position eines betreffenden Schnappverbindungselements an der Verbindungsstange in deren Längsrichtung auf. Bei diesen Eingriffsmitteln kann es sich z. B. um noppenartige Vorsprünge und dazu komplementäre Ausnehmungen handeln.

In Weiterbildung der Erfindung wird ferner vorgeschlagen, dass die Verbindungsstange und die Schenkel einander fluchtende Querlöcher aufweisen, die zur Durchführung eines Befestigungselements, z. B. einer Befestigungsschraube, geeignet sind. Eine solches Befestigungselement kann zur Unterstützung der Schnappbefestigung z. B. in Fällen dienen, in denen besonders schweres Fördergut mittels der Hängefördereinrichtung zu transportieren ist. Für den Transport von an Kleiderbügeln hängenden Kleidungsstücken reicht die Schnappbefestigung normalerweise aus.

In Weiterbildung der Erfindung wird ferner vorgeschlagen, dass die Hohlstangenabschnitte nach außen abstehende Teilungsanschläge aufweisen. Diese Teilungsanschläge verhindern, dass das mittels Haken an den Hohlstangenabschnitten oder den Überbrückungsstrangabschnitten angehängte Fördergut in Gefällestreckenbereichen oder Steigungsstreckenbereichen verrutscht und nicht mehr in der gewünschten Weise und Verteilung von den Fördergutträgern längs der Förderstrecke mitgenommen wird.

Ein Ausführungsbeispiel der Erfindung wird im Folgenden unter Bezugnahme auf die Zeichnungen näher erläutert.
- Fig. 1: zeigt einen Abschnitt einer Hängefördereinrichtung nach der Erfindung in einer perspektivischen Darstellung mit Blickrichtung von unten und von einer Seite sowie in Förderrichtung.
- Fig. 2: zeigt den Abschnitt aus Fig. 1 in der gleichen perspektivischen Darstellung wie in Fig. 1, jedoch unter Weglassung eines vorderen Laufschienenbleches.
- Fig. 3a: zeigt in einer Rückansicht den in Fig. 1 dargestellten Abschnitt der Hängefördereinrichtung.
- Fig. 3b: zeigt in einer teils aufgebrochenen und geschnittenen Seitenansicht einen entsprechenden Abschnitt der Hängefördereinrichtung.
- Fig. 3c: zeigt eine Schnittansicht der Hängefördereinrichtung mit der in Fig. 3b bei c-c angedeuteten Schnittebene.
- Fig. 4: zeigt einen entsprechenden Abschnitt der Hängefördereinrichtung unter Weglassung des vorderen Laufschienenbleches.
- Fig. 5a: zeigt in einer Seitenansicht einen Fördergutträger der Hängefördereinrichtung nach der Erfindung, wie er auch in dem Ausführungsbeispiel der Hängefördereinrichtung gemäß Fig. 1 - Fig. 4 erkennbar ist.
- Fig. 5b: zeigt den Fördergutträger aus Fig. 5a in einer Vorderansicht.
- Fig. 6 und 7: zeigen den Fördergutträger aus Fig. 5a und 5b in zwei unterschiedlichen perspektivischen Darstellungen.

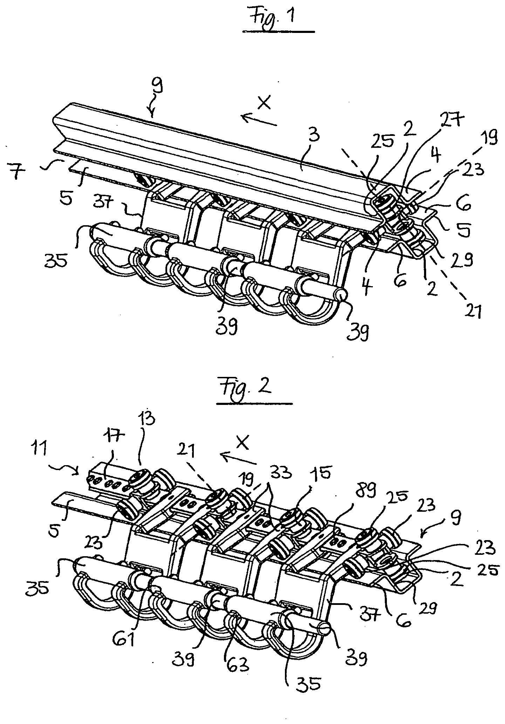

Der in Fig. 1 gezeigte Abschnitt der Hängefördereinrichtung weist zwei obere Führungsschienenbleche 3, 5 auf, die ein auf der Seite liegendes U-Profil mit rechtwinklig abgekanteten Schenkelenden 4, 6 haben und so zueinander angeordnet sind, dass sie einen im Querschnitt kreuzförmigen, unten offenen Hohlkanal 7 bilden, der sich in Längsrichtung der von den Führungsschienenblechen 3, 5 gebildeten Führungsschiene 9 und somit in Richtung der Förderstrecke X erstreckt.

An der Führungsschiene 9 ist als Zugmittel eine Förderkette 11 zur Bewegung längs der Förderstrecke X geführt. Die Förderkette 11 ist aus Kettengliedern 13 gebildet, die Kreuzgelenkkörper 15 und Verbindungsstangen 17 zwischen den Kreuzgelenkkörpern 15 aufweisen, und erlaubt somit die zur Anpassung an Kurven und Steigungsübergängen der Förderstrecke erforderlichen Änderungen der Winkelstellungen der aufeinander folgenden Kettenglieder 13 in vertikalen und horizontalen Ebenen. Die Kreuzgelenkkörper 15 weisen zwei orthogonal zueinander stehende Achsen 19, 21 auf, bei denen es sich um Drehachsen von Rollenpaaren 23, 25 handelt. Die Förderkette 11 ist mit den Rollenpaaren 25 an Rollbahnen 27, 29 der Führungsschiene 9 abgestützt, so dass die Rollen der Rollenpaare 25 an den Rollbahnen 27, 29 abrollen können, wenn die Förderkette 11 längs der Förderstrecke X bewegt wird. Die Rollbahnen 27, 29 sind die Innenseiten der unteren U-Schenkel 2 der Führungsschienenbleche 3, 5.

Die Rollen des Rollenpaares 23 erfahren von den abgewinkelten Schenkelenden 4, 6 der Führungsschienenbleche 3, 5 eine Seitenführung in dem Hohlkanal 7.

An der Verbindungsstange 17 der Förderkette 11 hängen Fördergutträger 31 nach der Erfindung, die sich nach unten aus dem Hohlraum 7 heraus erstrecken. Diese haben einen oberen Befestigungsabschnitt 33, einen rohrförmigen Hohlstangenabschnitt 35 und einen den Hohlstangenabschnitt 35 mit dem Befestigungsabschnitt 33 verbindenden Hohlstangenträgerabschnitt 37. In den Figuren 1, 2, 3b und 4 sind jeweils nur drei Fördergutträger 31 stellvertretend für eine üblicherweise große Anzahl von entsprechenden Fördergutträgern 31 und Überbrückungsstrangabschnitten 39 gezeigt, die entlang der gesamten Förderstrecke verteilt sind.

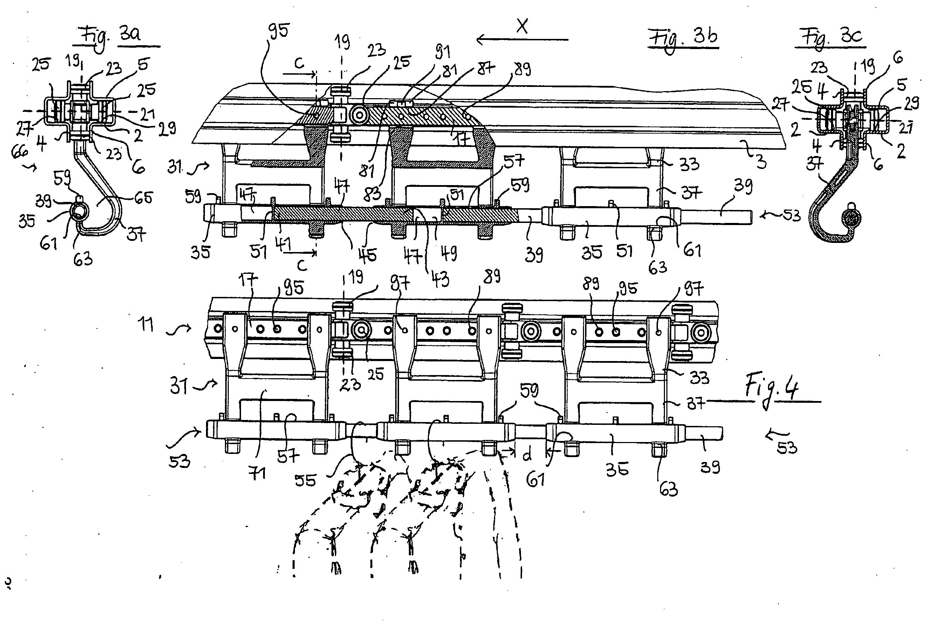

Die rohrförmigen Hohlstangenabschnitte 35 erstrecken sich längs der Förderstrecke X und sind durch Überbrückungsstrangabschnitte 39 aus einem vorzugsweise biegsamen Kunststoff, z. B. Polyurethan-Kunststoff, verbunden. Die Überbrückungsstrangabschnitte 39 haben die Form einer Rundstange und erstrecken sich mit ihren entgegengesetzten Längsenden 41, 43 durch die einander gegenüberliegenden Öffnungen 45 der Hohlräume 47 einander benachbarter Hohlstangenabschnitte 35, wie dies insbesondere in Fig. 3b gut zu erkennen ist.

Die Überbrückungsstrangabschnitte 39 sind mit Längsspiel 49 in den einander gegenüberliegenden Hohlräumen 47 der einander benachbarten Fördergutträger 31 sozusagen schwimmend gelagert, so dass sie eine Vergrößerung und Verkleinerung des Abstandes d zwischen den Hohlstangenabschnitten 35 aufeinander folgender Fördergutträger 31 unter Vermeidung von größeren Spannungen zwischen den betreffenden Fördergutträgern 31 ermöglichen. Solche Änderungen des Abstandes d treten z. B. bei Kurvenfahrten der Fördergutträger 31 oder beim Übergang zu Steigungen oder Gefällen auf. Das Längsspiel 49 der Überbrückungsstrangabschnitte 39 ist durch Anschlagelemente 51 begrenzt, bei denen es sich im Beispielsfall um Trennwände in Längsmitte der Hohlstangenabschnitte 35 handelt.

Die Hohlstangenabschnitte 35 und die sich dazwischen erstreckenden Überbrückungsstrangabschnitte 39 bilden einen Anhängstrang 53. Der Anhängstrang dient zum Anhängen von Förderguthaken 55, wie dies in Fig. 4 mit unterbrochenen Linien schematisch angedeutet ist. Dabei handelt es sich im Beispielsfall um die Haken 55 von Kleiderbügeln, an denen Kleidungsstücke hängen. Selbstverständlich kann die Hängefördereinrichtung auch zum Transport von anderem Fördergut als Kleidungsstücken verwendet werden. So ist es durchaus möglich, dass anstelle von Kleiderbügeln andere Fördergutträgersysteme, z. B. Körbe, Taschen oder dgl. an den Anhängstrang 53 anzuhängen sind.

Die Hohlstangenabschnitte 35 sind an ihren entgegengesetzten axialen Enden außen konisch abgeschrägt, so dass der Übergang zwischen den Hohlstangenabschnitten 35 und den benachbarten Überbrückungsstrangabschnitten 39 möglichst stetig verläuft, damit Verkantungen von Fördergutträgerhaken 55 an solchen Übergängen vermieden werden.

An der Oberseite 57 der Hohlstangenabschnitte 35 sind stiftartige Teilungsanschläge 59 vorgesehen, die radial nach oben abstehen. Diese Teilungsanschläge 59 verhindern, dass die Förderguthaken 55 und das daran hängende Fördergut in unerwünschter Weise verrutschen, wenn die betreffenden Fördergutträger in Gefällestrecken oder Steigungsstrecken schräg ausgerichtet sind.

Das Beschicken des Anhängstrangs 53 mit Fördergut und auch das Abnehmen von Fördergut von dem Anhängstrang 53 lässt sich bei dem gezeigten Ausführungsbeispiel der Hängefördereinrichtung auf vergleichsweise einfache Weise durchführen, da aufgrund der speziellen Form der Hohlstangenträgerabschnitte 37 seitliche und obere Störkonturen an den Hohlstangenabschnitten 35 vermieden werden. Dies ist insbesondere in den Figuren 3a und 3c erkennbar. Die Hohlstangenträgerabschnitte 37 haben - in Förderrichtung gesehen - ein Hakenprofil mit einem den Hohlstangenabschnitt 35 an einer Abstützstelle an dessen Unterseite 61 stützenden Hakenende 63.

Diese Hakenform schafft somit einen Freiraum 65 um die Hohlstangenabschnitte 35 herum, der nur an der Unterseite 61 durch das Hakenende 63 an der Abstützstelle unterbrochen ist. Dieser Freiraum 65 erstreckt sich durchgehend in Förderrichtung X. Das Anhängen der Förderguthaken 55 erfolgt von der offenen Hakenseite 66 der Hohlstangenträgerabschnitte 37 her.

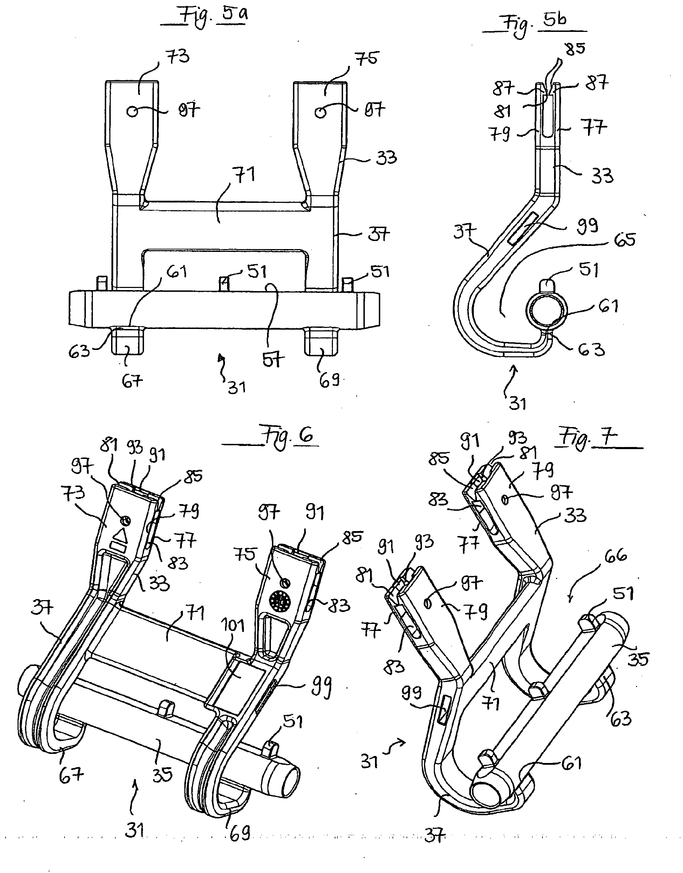

Im Beispielsfall haben die Fördergutträger 31 zwei in Längsrichtung ihres Hohlstangenabschnittes 35 voneinander beabstandete, gleichartige Hakenprofilelemente 67, 69 des Hohlstangenträgerabschnitts 37, wie dies insbesondere in den Figuren 6 und 7 gut erkennbar ist. Die beiden Hakenprofilelemente 67, 69 sind an den äußeren Hakenenden 63 durch den Hohlstangenabschnitt 35 miteinander verbunden. In einem oberen Bereich ist noch ein Verbindungssteg 71 zur Verbindung der beiden Hakenprofilelemente 67, 69 vorgesehen. Eine solche Konstruktion bietet eine gute mechanische Stabilität bei äußerst geringem Eigengewicht der Fördergutträger 31.

Oberhalb des Verbindungsstegs 71 weisen die Fördergutträger 31 in ihrem Befestigungsabschnitt 33 zwei Schnappverbindungselemente 73, 75 auf, die in Verlängerung der Hakenprofilelemente 67, 69 nach oben abstehen. Mittels dieser Schnappverbindungselemente 73, 75 sind die Fördergutträger 31 an den Verbindungsstangen 17 der Förderkettenglieder 13 befestigt.

Die Schnappverbindungselemente 73, 75 haben jeweils zwei Schenkel 77, 79, die die jeweilige Verbindungsstange 17 eines betreffenden Förderkettengliedes 13 zwischen sich aufnehmen. Bei der Montage werden die Schnappverbindungselemente 73, 75 von unten her auf die Verbindungsstange 17 aufgeschoben. Dabei tritt die Verbindungsstange 17 mit ihrem unteren Ende in die obere Aufspreizöffnung 81 zwischen den beiden Schenkeln 77, 79 des betreffenden Schnappverbindungselementes 73 bzw. 75, wobei es zum Auseinanderspreizen der Schenkel 77, 79 kommt und die Verbindungsstange 17 in die Aufnahme 83 zwischen den Schenkeln 77, 79 gelangt. Das Auseinanderspreizen der Schenkel 77, 79 wird durch Schrägflächen 85 an der Innenseite der Spreizöffnungen 81 erleichtert, die bei Beaufschlagung durch das untere Ende der Verbindungsstange 17 ein keilschubartiges Auseinanderdrücken der Schenkel 77, 79 bewirken. Die Schenkel 77, 79 weisen an ihren oberen, freien Schenkelenden hakenförmige oder keilförmige Bereiche mit Hinterschneidungen 87 auf, mit denen sie die in der Aufnahme 83 aufgenommene Verbindungsstange 17 eines betreffenden Kettengliedes 13 an dessen Oberseite übergreifen. Die Aufnahmen 83 sind so dimensioniert, dass die Verbindungsstangen darin passend und unter Klemmwirkung der Schenkel 77, 79 aufgenommen sind bzw. werden können. Die Hinterschneidungen 87 bilden mit ihren zu den Oberseiten der Verbindungsstangen 17 vorzugsweise parallelen Flächen eine quasi formschlüssige Sicherung gegen das Abrutschen des Fördergutträgers 31 von der Förderkette 11.

Bei dem gezeigten Ausführungsbeispiel der Erfindung ist eine zusätzliche Sicherung gegen das Verrutschen der Fördergutträger 31 längs der Verbindungsstange 17 der Förderkette 11 vorgesehen. Hierbei handelt es sich um einander komplementäre und in gegenseitigem Eingriff stehende, noppenartige Erhebungen 89 an den Breitseiten der Verbindungsstangen 17 und um Ausnehmungen 91 an den Innenseiten der Schenkel 77, 79 der Schnappverbindungselemente 73, 75. Diese Ausnehmungen 91 erstrecken sich etwa in Breitenmitte der Schenkelinnenseiten von oben nach unten und sind so dimensioniert, dass sie eine jeweilige noppenartige Erhebung 89 bei entsprechend positioniertem Ansetzen der Schnappverbindungselemente 73, 75 bei der Montage passend aufnehmen können. Die quer zur Förderrichtung verlaufenden Seitenflächen 93 der Ausnehmungen 91 bilden Anschläge für darin aufgenommene noppenartige Erhebungen 89. Dadurch wird verhindert, dass die Fördergutträger 31 längs der Verbindungsstangen 17 verrutschen können. Diese noppenartigen Erhebungen 89 sind von Durchgangslöchern 95 der Verbindungsstangen 17 durchsetzt. Auch die Schnappverbindungselemente 73, 75 weisen entsprechende Durchgangslöcher 97 auf. Das Lochraster der Durchgangslöcher 95 der Verbindungsstangen 17 ist auf den Lochabstand zwischen den Durchgangslöchern 97 der Schnappverbindungselemente 73, 75 abgestimmt, so dass bei einer bestimmungsgemäßen Montageanordnung die Löcher 97 mit Löchern 95 fluchten. Bei Bedarf kann somit ein Befestigungsstift oder eine Befestigungsschraube jeweils durch diese miteinander fluchtenden Löcher 95, 97 gesteckt werden, um die Verbindung zwischen den Fördergutträgern 31 und der Förderkette 11 zu stabilisieren, falls dies für erforderlich erachtet wird, z. B. wenn besonders schweres Fördergut zu transportieren ist.

Die Fördergutträger 31 weisen einen Hohlraum 99 zur Aufnahme eines Identifizierungsmittels, etwa eines RFID-Chips auf. Ferner ist eine Fläche 101 für die Anbringung eines Barcodes oder dgl. vorgesehen.

Zusammenfassend kann darauf hingewiesen werden, dass die Hängefördereinrichtung besondere Vorteile bei der Montage der Fördergutträger 31 an der Förderkette 11 einschließlich der Montage der Überbrückungsstrangabschnitte 39 zwischen den einzelnen Fördergutträgern 31 hat. Ferner ist das Förderverhalten im Vergleich zu gattungsgemäßen Hängefördereinrichtungen nach dem Stand der Technik erheblich durch die Ausgleichsspiel erlaubende Lagerung der Überbrückungsstrangabschnitte 39 verbessert worden. Ein weiterer Vorteil liegt in der im Wesentlichen störkonturfreien Belade- und Entlademöglichkeit des von den Hohlstangenabschnitten und Überbrückungsstrangabschnitten gebildeten Anhängstranges 53.

## Patentansprüche

1. Hängefördereinrichtung, umfassend
- ein längs einer Förderstrecke geführtes, längliches, insbesondere als Endlosschleife ausgebildetes Zugmittel (11),
- eine Vielzahl an dem Zugmittel (11) hängend angeordneter Fördergutträger (31) mit einem jeweiligen in Förderrichtung (X) ausgerichteten, rohrartigen Hohlstangenabschnitt (35), der einen an seinen Längsenden offenen Hohlraum (47) aufweist,
- eine strangartige, insbesondere biegsame Verbindungsanordnung, die die Fördergutträger (31) verbindet und bereichsweise in den Hohlräumen (47) der Hohlstangenabschnitte (35) aufgenommen ist,
wobei die strangartige Verbindungsanordnung unterteilt ist in einzelne, voneinander getrennte Überbrückungsstrangabschnitte (39), die jeweils mit ihren entgegengesetzten Längsenden (41, 43) in Hohlräume (47) der Hohlstangenabschnitte (35) aufeinander folgender Fördergutträger (31) eingreifen und diese miteinander verbinden, wobei die Überbrückungsstrangabschnitte (39) relativ zu den betreffenden Fördergutträgern (31) unter Aufrechterhaltung der Verbindung dazwischen mit Längsspiel (49) verschiebbar in den Hohlräumen (47) der Hohlstangenabschnitte (35) der Fördergutträger (31) aufgenommen sind, wobei die Fördergutträger (31) einen jeweiligen Befestigungsabschnitt (33) zur Befestigung an dem Zugmittel (11) und einen den Befestigungsabschnitt (33) mit dem Hohlstangenabschnitt (35) verbindenden Hohlstangenträgerabschnitt (37) aufweisen, und wobei der Hohlstangenträgerabschnitt (37) - in Förderrichtung (X) gesehen - wenigstens ein den Hohlstangenabschnitt (35) an einer Seite mit seitlichem Abstand umgebendes Hakenprofil (67, 69) mit einem den Hohlstangenabschnitt (35) an einer Abstützstelle an dessen Unterseite (61) stützenden Hakenende (63) aufweist, so dass der Hohlstangenabschnitt (35) abgesehen von der jeweiligen unteren Abstützstelle von einem Freiraum (65) umgeben ist,
wobei die Hohlstangenabschnitte (35) in ihren Hohlräumen (47) Anschlagelemente (51) zur Begrenzung des Längsspiels (49) der Überbrückungsstrangabschnitte (39) aufweisen.

2. Hängefördereinrichtung nach Anspruch 1, **dadurch gekennzeichnet, dass** der Fördergutträger (31) aus Kunststoff gebildet ist.

3. Hängefördereinrichtung nach Anspruch 2, **dadurch gekennzeichnet, dass** der Fördergutträger (31) ein einstückig integrales Spritzgussteil ist.

4. Hängefördereinrichtung nach einem der vorhergehenden Ansprüche **dadurch gekennzeichnet, dass** der Befestigungsabschnitt (33) wenigstens ein Schnappverbindungselement (73, 75) aufweist, welches mit dem Zugmittel (11) in Schnappverbindung steht.

5. Hängefördereinrichtung nach Anspruch 4, **dadurch gekennzeichnet, dass** das Schnappverbindungselement (73, 75) zwei Schenkel (77, 79) aufweist, die das Zugmittel (11) zwischen sich aufnehmen.

6. Hängefördereinrichtung nach Anspruch 5, **dadurch gekennzeichnet, dass** die Schenkel (77, 79) des Schnappverbindungselementes (73, 75) an ihren freien Schenkelenden einander gegenüberliegende hakenförmige Bereiche mit Hinterschneidungen (87) aufweisen, mit denen sie das Zugmittel (11) an dessen Oberseite übergreifen.

7. Hängefördereinrichtung nach Anspruch 5 oder 6, **dadurch gekennzeichnet, dass** das Zugmittel (11) und die Schenkel (77, 79) einander komplementäre und in gegenseitigem Eingriff stehende Eingriffsmittel (89, 91) zur Festlegung der Position des Schnappverbindungselementes (73, 74) an dem Zugmittel (11) in dessen Längsrichtung aufweisen.

8. Hängefördereinrichtung nach Anspruch 7, **dadurch gekennzeichnet, dass** die Eingriffsmittel (89) Noppen und dazu komplementäre Ausnehmungen (91) umfassen.

9. Hängefördereinrichtung nach einem der vorhergehenden Ansprüche, **dadurch gekennzeichnet, dass** das Zugmittel (11) eine Förderkette mit Kettengliedern (13) aus Gelenkkörpern (15) und Verbindungsstangen (17) zwischen den Gelenkkörpern (15) ist.

10. Hängefördereinrichtung nach Anspruch 9, **dadurch gekennzeichnet, dass** die Schnappverbindungselemente (73, 75) mit den Verbindungsstangen (17) der Förderkette (11) verbunden sind und dass die Verbindungsstangen (17) und die Schenkel (77, 79) der Schnappverbindungselemente (73, 75) einander fluchtende Querlöcher (95, 97) aufweisen.

11. Hängefördereinrichtung nach einem der vorhergehenden Ansprüche, **dadurch gekennzeichnet, dass** die Hohlstangenabschnitte (35) nach außen abstehende Teilungsanschläge (59) für an die Hohlstangenabschnitte (35) anzuhängende Förderguthaken (55) aufweisen.

12. Hängefördereinrichtung nach einem der vorhergehenden Ansprüche, **dadurch gekennzeichnet, dass** die Überbrückungsstrangabschnitte (39) aus einem biegsamen Material, insbesondere Kunststoff bestehen.

## Claims

1. Suspended conveying device, comprising
- an elongated traction means (11), guided along a conveying path, in particular adapted as a 1continuous loop,
- a plurality of carriers for transported goods (31) arranged suspended to the traction means (11) with a respective tube-like hollow rod section (35) aligned in the conveying direction (X), comprising a cavity (47) which is open at its longitudinal ends,
- a thread-like, in particular flexible connection arrangement, connecting the carriers for transported goods (31) and being partly received inside the cavities (47) of the hollow rod sections (35), wherein
the thread-like connection arrangement is divided into single separated bridging thread sections (39) engaging with their opposed longitudinal ends (41, 43) in cavities (47) of said hollow rod sections (35) of consecutive carriers for transported goods (31) and interconnecting them, wherein said bridging thread sections (39) are received slideably in the cavities (47) of said hollow rod sections (35) of the conveying goods carriers (31) with longitudinal play (49) in relation to the respective conveying goods carriers (31), maintaining the interconnection, wherein said carriers for transported goods (31) comprise a respective fixing section (33) for fixing at the traction means (11) and a hollow rod carrier section (37) connecting the fixing section (33) to the hollow rod section (35), and wherein the hollow rod carrier section (37) - viewed in the conveying direction (X) - comprises at least one hook profile (67, 69) enclosing said hollow rod section (35) at one side with a lateral distance with a hook end (63) supporting the hollow rod section (35) at a support site at its bottom side (61), so that the hollow rod section (35) is enclosed by a free space (65) except for the respective lower support site,
wherein the hollow rod sections (35) comprise stop elements (51) in their cavities (47) for limiting the longitudinal play (49) of said bridging thread sections (39).

2. Suspended conveying device according to claim 1, **characterized by** said carrier for transported goods (31) being formed from plastic.

3. Suspended conveying device according to claim 2, **characterized by** said carrier for transported goods (31) being an integral single piece injection-moulded part.

4. Suspended conveying device according to one of the preceding claims, **characterized by** the fixing section (33) comprising at least one snap-on connection element (73, 75) in snap-on connection with the traction means (11).

5. Suspended conveying device according to claim 4, **characterized by** said snap-on connection element (73, 75) comprising two legs (77, 79) receiving the traction means (11) in between.

6. Suspended conveying device according to claim 5, **characterized by** the legs (77, 79) of said snap-on connection element (73, 75) comprising opposed hook-shaped sections with undercuts (87) at the free leg ends, whereby they catch over the traction means (11) at its upper side.

7. Suspended conveying device according to claim 5 or 6, **characterized by** the traction means (11) and the legs (77, 79) comprising complementary engagement means (89, 91) in mutual engagement for fixing the position of the snap-on connection element (73, 74) at the traction means (11) in its longitudinal direction.

8. Suspended conveying device according to claim 7, **characterized by** said engagement means (89) comprising burls and complementary recesses (91).

9. Suspended conveying device according to one of the preceding claims, **characterized by** the traction means (11) being a conveying chain with chain links (13) made of linking bodies (15) and linking rods (17) between the linking bodies (15).

10. Suspended conveying device according to claim 9, **characterized by** said snap-on connection elements (73, 75) being linked to the linking rods (17) of the conveying chain (11) and by the linking rods (17) and the legs (77, 79) of said snap-on connection elements (73, 75) comprising flush-aligned cross holes (95, 97).

11. Suspended conveying device according to one of the preceding claims, **characterized by** said hollow rod sections (35) comprising partition stops (59) which are projecting outwards for the conveying good hooks (55) to be hooked on to the hollow rod sections (35).

12. Suspended conveying device according to one of the preceding claims, **characterized by** said bridging thread sections (39) being formed from a flexible material, in particular a plastic material.

## Revendications

1. Dispositif de transport suspendu, comprenant
- un moyen de traction élongé (11), guidé le long d'une voie de transport, en particulier adapté comme boucle infinie,
- une pluralité de supports de produits à transporter (31) arrangés de manière suspendus au moyen de traction (11) avec une section de barre creuse (35) tubulaire respective alignée dans la direction de transport (X), comprenant une cavité (47) ouverte à ses extrémités longitudinales,
- un arrangement de liaison sous forme de cordon, en particulier flexible, liant les supports de produits à transporter (31) et étant en partie reçu dans les cavités (47) des sections de barre creuse (35),
l'arrangement de liaison sous forme de cordon étant divisé en sections de cordon de pont (39) séparées, engageant avec leurs extrémités longitudinales opposées (41, 43) des cavités (47) des sections de barre creuse (35) de supports de produits à transporter (31) successifs pour les relier, les sections de cordon de pont (39) étant reçues de manière déplaçable dans les cavités (47) des sections de barre creuse (35) des supports de produits à transporter (31) avec du jeu axial (49) en relation aux supports de produits à transporter (31) respectifs, maintenant la liaison, où lesdits supports de produits à transporter (31) comprennent une section respective de fixation (33) pour une fixation au moyen de traction (11) et une section de support de barre creuse (37) reliant la section de fixation (33) à la section de barre creuse (35) et où la section de support de barre creuse (37) - vue dans la direction de transport (X) - comprend au moins un profil de crochet (67, 69) entourant la section de barre creuse (35) à un côté avec une distance latérale, avec une extrémité de crochet (63) supportant la section de barre creuse (35) à un endroit de support de la face inférieure (61) de sorte que la section de barre creuse (35) est entourée par un espace libre (65) à l'exception de l'endroit de support respectif,
les sections de barre creuse (35) comprenant dans leurs cavités (47) des éléments de butée (51) pour limiter le jeu axial (49) des sections de cordon de pont (39).

2. Dispositif de transport suspendu selon la revendication 1, **caractérisé par** le support de produits à transporter (31) étant formé en plastique.

3. Dispositif de transport suspendu selon la revendication 2, **caractérisé par** le support de produits à transporter (31) étant une pièce moulée par injection intégrale en une pièce.

4. Dispositif de transport suspendu selon une des revendications précédentes, **caractérisé par** la section de fixation (33) comprenant au moins un élément de connexion à encliquetage (73, 75) qui est en connexion à encliquetage avec le moyen de traction (11).

5. Dispositif de transport suspendu selon la revendication 4, **caractérisé par** l'élément de connexion à encliquetage (73, 75) comprenant deux branches (77, 79) recevant le moyen de traction (11) entre elles.

6. Dispositif de transport suspendu selon la revendication 5, **caractérisé par** les branches (77, 79) de l'élément de connexion à encliquetage (73, 75) comprenant à leurs extrémités de branche libres des régions en forme de crochet opposées avec des contre-dépouilles (87) par lesquelles elles viennent en prise sur le moyen de traction (11) à sa face supérieure.

7. Dispositif de transport suspendu selon les revendications 5 ou 6, **caractérisé par** le moyen de traction (11) et les branches (77, 79) comprenant des moyens d'engagement complémentaires et en engagement mutuel (89, 91) pour fixer la position de l'élément de connexion à encliquetage (73, 74) au moyen de traction (11) dans sa direction longitudinale.

8. Dispositif de transport suspendu selon la revendication 7, **caractérisé par** les moyens d'engagement (89) comprenant des picots et des encoches (91) complémentaires.

9. Dispositif de transport suspendu selon une des revendications précédentes, **caractérisé par** le moyen de traction (11) étant une chaîne de transport avec des maillons de chaîne (13) formés de corps d'articulation (15) et de barres de liaison (17) entre les corps d'articulation (15).

10. Dispositif de transport suspendu selon la revendication 9, **caractérisé par** les éléments de connexion à encliquetage (73, 75) étant reliés aux barres de liaison (17) de la chaîne de transport (11) et par les barres de liaison (17) et les branches (77, 79) des éléments de connexion à encliquetage (73, 75) comprenant des passages transversaux (95, 97) en alignement.

11. Dispositif de transport suspendu selon une des revendications précédentes, **caractérisé par** les sections de barre creuse (35) comprenant des butées de division (59) saillies vers l'extérieur pour des crochets de produits transportés (55) à accrocher aux sections de barre creuse (35).

12. Dispositif de transport suspendu selon une des revendications précédentes, **caractérisé par** les sections de cordon de pont (39) étant réalisées en un matériau flexible, en particulier en plastique.
